Europäisches Patentamt

European Patent Office

Office européen des brevets

(11) Veröffentlichungsnummer: **0 021 188**
A1

(12) # EUROPÄISCHE PATENTANMELDUNG

(21) Anmeldenummer: 80103155.0

(51) Int. Cl.³: **A 22 C 11/12**

(22) Anmeldetag: 06.06.80

(30) Priorität: 08.06.79 DE 2923186

(71) Anmelder: **HOECHST AKTIENGESELLSCHAFT, KALLE Niederlassung der Hoechst AG Patentabteilung Postfach 3540, Rheingaustrasse 190 D-6200 Wiesbaden 1 (DE)**

(43) Veröffentlichungstag der Anmeldung: 07.01.81 **Patentblatt 81/1**

(72) Erfinder: **Heyse, Klaus, Kelkheimer Strasse 10, D-6232 Bad Soden (DE)**

(84) Benannte Vertragsstaaten: **AT CH DE FR GB LI**

(54) **Schlauchförmiger Verpackungshüllenabschnitt mit zusammengefasstem, verclipptem Ende, seine Herstellung und Verwendung.**

(57) Ein schlauchförmiger, flexibler Verpackungshüllenabschnitt (1) aus thermoplastischer, unter Einwirkung von Wärme schrumpfender Kunststoffolie besitzt eine endseitig mit einem Klemmelement (4) aus Metall, z. B. mit einem Metallclip, verschlossene Hüllenzusammenfassung. Der unter der Preßkrafteinwirkung des Klemmelements (4) stehende Bereich der Hüllenzusammenfassung ist thermisch-mechanisch verdichtet und zeigt durch Wärme angeschrumpfte, verdickte Randbereiche (8) unmittelbar neben dem Klemmelement (4).

EP 0 021 188 A1

H O E C H S T   A K T I E N G E S E L L S C H A F T
KALLE  Niederlassung der Hoechst AG

Hoe 79/K 018                - 1 -                WLJ-Dr.Gt.-g
                                                27. Mai 1980

Schlauchförmiger Verpackungshüllenabschnitt mit zusammengefaßtem, verclipptem Ende, seine Herstellung und Verwendung

Die Erfindung betrifft einen Verpackungshüllenabschnitt von der im Oberbegriff des Anspruchs 1 genannten Art, ein Verfahren zur Herstellung des Abschnitts sowie dessen Verwendung bei der Herstellung von Würsten.

Bekannte, aus thermoplastischer Kunststoffolie bestehende Schlauchhüllenabschnitte mit zusammengefaßtem, verclipptem Ende  haben in vielen Fällen den Nachteil, daß ihre Verschlüsse, insbesondere gegen Flüssigkeiten sowie flüssiges Fett, nicht hinreichend dicht sind.

Der Erfindung liegt die Aufgabe zugrunde, einen Schlauchhüllenabschnitt vorzuschlagen, der an seinem einen Ende durch eine  von einer Klemmeinrichtung zusammengepreßten Hüllenzusammenfassung verschlossen ist, wobei der durch die Klemmeinrichtung zusammengepreßte Zusammenfassungsbereich hinreichend undurchlässig für flüssige Stoffe, wie wäßrige Lösungen und flüssige oder verflüssigte Fette, und Gase ist.

Die der Erfindung zugrunde liegende Aufgabe wird gelöst mit einem Hüllenabschnitt einer Ausbildung gemäß Anspruch 1, sowie durch das im Anspruch 5 angegebene Verfahren und die im Anspruch 9 genannte Verwendung. Weitere Ausbildungen der Erfindung sind in den Unteransprüchen 2 bis 4 und 6 bis 8 angegeben.

Die den erfindungsgemäßen Abschnitt bildende schlauchförmige Hülle besteht aus thermoplastischer unter Einwirkung von Wärme schrumpfender Kunststoffolie, Die den
Hüllenabschnitt bildende Folie aus thermoplastischem
Kunststoff schrumpft bei Einwirkung hinreichender Wärme
unter Veränderung ihrer flächigen Abmessungen und zugleicher
Zunahme ihrer Dicke. Der Hüllenabschnitt besteht beispielsweise aus Polyamid, bevorzugt aus streckorientierter
Polyäthylenterephthalatfolie, ganz besonders bevorzugt
aus solcher, die bei Einwirkung hinreichender Wärme um
ca. 20% schrumpft, wobei ihre Dicke entsprechend zunimmt.

Das den Abschnitt bildende Schlauchhüllenstück ist an seinem
einen Ende durch eine Hüllenzusammenfassung verschlossen,
die von einer diese partiell und am gesamten Umfang umgebenden mechanischen Klemmeinrichtung aus Metall zusammengepreßt
und gehalten wird.

Die Hüllenzusammenfassung an einem Ende des Hüllenabschnitts
kann in Gestalt einer, durch längsaxiales  Tordieren eines
Endes des Hüllenabschnitts herstellbaren, helixförmigen
längsaxialen Verdrillung oder in Gestalt eines leporelloartig gefaltet ausgebildeten Plissees vorliegen, bei dem die
Kanten der Plisseefalten sich hüllenlängsaxial erstrecken.
Diese bevorzugt ausgebildete Zusammenfassung kann durch
Flachlegen eines Endteils des Hüllenabschnitts und Vielfachfältelung des flachgelegten Teils derart, daß die Faltkanten
der gleichbreiten Falten jeweils längsaxial und parallel
fluchtend verlaufen, ausgebildet werden.

0021188

HOECHST AKTIENGESELLSCHAFT
KALLE Niederlassung der Hoechst AG

- 3 -

An der Hüllenzusammenfassung ist ein mechanisches Klemmelement aus Metall vorgesehen, das den gesamten Umfang umschließt und Preßkraft auf die von ihm umschlossenen Teile
der Hüllenzusammenfassung ausübt, so daß diese dauerhaft
eng zusammengepreßt wird. Die Hüllenzusammenfassung ist
nicht auf ihrer gesamten Länge, sondern partiell von dem
Klemmelement umgeben.

Das mechanische Klemmelement wird nachfolgend Clip genannt,
es besteht bevorzugt aus Metalldraht, insbesondere aus einer
Aluminiumlegierung. Der Draht ist im Querschnitt bevorzugt
kreisförmig, oval oder rechteckig.

Der Clip umgibt die Hüllenzusammenfassung wendelartig um die
Längsachse, wobei er wenigstens eine ganze Wendel bildet.
Der Clip kann auch als längsaxial geschlitzter Hohlkörper ausgebildet sein, dessen schlitzkantennahe Bereiche jeweils
nach innen gebogen sind. Der unter Preßkrafteinwirkung des
Clips stehende Teil der Hüllenzusammenfassung wird als Zusammenfassungsverschluß bezeichnet.

Der Zusammenfassungsverschluß besitzt eine Ausbildung, die
sich ergibt, wenn man die ihn bildenden gefältelten oder
verdrillten, unter Preßkrafteinwirkung durch das Klemmelement
stehenden Hüllenteile einer Wärmebeaufschlagung unterwirft,
sie in den thermoelastischen, formbaren Zustand überführt
und ihre Schrumpfung unter Dickenzunahme bewirkt, und diese
Hüllenteile anschließend unter Konstanthaltung der auf sie
wirkenden Preßkraft auf eine Temperatur unterhalb des Umwandlungspunktes 2. Ordnung des die Hülle bildenden Kunststoffs abkühlt.

Der die Hüllenzusammenfassung partiell umschließende und zusammenpressende Clip weist herstellungsbedingt permanente, auf Materialspannung zurückführende Federkräfte auf, welche Ursache der Preßkraft sind, die zur Verdichtung der im thermoelastischen formbaren Zustand befindlichen Folienteile führt, die den vom Clip umgriffenen Zusammenfassungsbereich bilden; zugleich wirkt der unter federnder Spannung stehende Clip als Widerlager für die infolge Wärmeschrumpfung an Dicke zunehmenden Teile der Hüllenfolie, die den vom Clip umgriffenen Verschlußbereich bilden.

Die erfindungsgemäß angestrebten Eigenschaften des Verpackungshüllenabschnitts sind demnach einerseits auf eine Verdichtung des vom Clip umgebenen Hüllenzusammenfassungsbereichs infolge der von ihm ausgeübten Preßkrafteinwirkung auf die Hüllfolie in thermoelastisch formbarem Zustand und andererseits auf Wärmeschrumpfung der in Rede stehenden Folienteile unter Verdickung derselben, insbesondere im Randbereich des Zusammenfassungsverschlusses und zugleicher Preßkrafteinwirkung des Clips auf diese zurückzuführen.

Der undurchlässige Zusammenfassungsverschluß soll als thermisch-mechanisch verdichtet bezeichnet werden.

Der Zusammenfassungverschluß ist praktisch undurchlässig für Flüssigkeiten, insbesondere Wasser, wässrige Lösungen sowie flüssige Fette; er verhindert auch das Durchströmen von Gasen. Als undurchlässig soll der Zusammenfassungsverschluß gelten, wenn er einen nach der folgenden Methode gemessenen elektrischen Widerstand von größer als 100 000 kΩ besitzt:

HOECHST   AKTIENGESELLSCHAFT
KALLE  Niederlassung der Hoechst AG

- 5 -


Der erfindungsgemäße Abschnitt wird in der Weise aufgehängt, daß die Hüllenlängsachse vertikal verläuft und das zusammengefaßte, verclippte Hüllenende nach unten weist. In den Hohlraum des Abschnitts wird dann ungefähr 3 gewichtsprozentige wässrige NaCl-Lösung eingefüllt. Der mit wässriger Kochsalzlösung gefüllte Abschnitt wird derart aufgehängt, daß sein zusammengefaßtes verclipptes Ende völlig in ungefähr 3 gewichtsprozentige wässrige Kochsalzlösung eintaucht, die sich in einem wannenartigen Behälter, der unterhalb des Beutels aufgestellt ist, befindet.

Auf die Flüssigkeit im Hohlraum des Hüllenabschnitts läßt man Druck von ca. 0,2 bar wirken.

Sowohl in die wässrige NaCl-Lösung im Hohlraum des Hüllenabschnitts als auch in die wässrige NaCl-Lösung im wannenartigen Behälter wird jeweils eine Elektrode eingeführt. Die Elektroden stehen jeweils mit einer gemeinsamen Spannungsquelle (Batterie) in Verbindung. In den Stromkreis wird ein Gerät zur Messung des elektrischen Widerstandes eingeschaltet.

Es folgen Angaben zum elektrischen Widerstand:
Mittels des elektrischen Meßgerätes wird nun der Widerstand gemessen, er ist größer als 100 000 k$\Omega$.

Vergleichsweise dazu beträgt der elektrische Widerstand von Zusammenfassungen, die keinen thermisch-mechanisch verdichteten Verschluß aufweisen, 50 bis 2000 k$\Omega$.

HOECHST AKTIENGESELLSCHAFT
KALLE Niederlassung der Hoechst AG

- 6 -

Nachfolgend wird die Herstellung eines Gegenstandes nach Anspruch 1 beispielhaft anhand einer bevorzugten Verfahrensweise beschrieben.

Ausgangsmaterialien:
Schlauchhülle aus streckorientierter Polyäthylenterephthalatfolie einer Dicke von etwa 20 um, die bei Einwirkung einer Temperatur von ca. 70 bis 90°C ca. 20% schrumpft. Der Verpackungshüllenabschnitt ist beispielsweise 50 cm lang und hat einen Innendurchmesser von 12 cm. Aluminiumdrahtstücke einer Länge von beispielsweise 24 mm und einem Druchmesser von beispielsweise 3,0 mm zur Bildung der Clips.

Ein beispielsweise ca. 2,5 cm langer Endabschnitt des Verpackungshüllenabschnitts wird flachgelegt und zusammengefaßt. Das Flachlegen erfolgt beispielsweise durch leporelloartige Mehrfachfältelung in der Weise, daß die Kanten der gebildeten jeweils gleichbreiten Falten jeweils hüllenaxial verlaufen. Die Zusammenfassung bildet danach ein aus dem Schlauchhüllenendabschnitt gebildetes Faltenplissee. Das Plissee weist beispielsweise ca. 6 bis 8 Falten auf.

Ein Stück Aluminiumdraht wird nun spiralförmig um den Umfang der Zusammenfassung gelegt und fest an diese gepreßt. Die Länge des Drahtstücks wird dabei derart bemessen und der Clip in der Weise ausgebildet, daß das Drahtstück wenigstens eine ganze Wendel bildet. Vorteilhaft umfaßt der Clip mehr als eine ganze Wendel, beispielsweise 1 1/2 bis 2 oder auch mehr Wendel. Der gewendelte Clip wird vorteilhaft mit geringstmöglicher Wendelsteigung ausgebildet, so daß sich benachbarte

HOECHST AKTIENGESELLSCHAFT
KALLE Niederlassung der Hoechst AG

- 7 -

Teile des Clips berühren.

Der Clip bzw. die Art seiner Anbringung an der Zusammenfassung sind jeweils für sich nicht Gegenstand vorliegender Erfindung. Verfahren zum Verclippen zusammengefaßter Hüllenenden sowie Vorrichtungen zur Durchführung der Verfahren gehören zum Allgemeinwissen des Fachmanns.

Der unter Preßdruck des Clips stehende Bereich der Zusammenfassung wird nun mit Wärme einer Temperatur beaufschlagt, die hinreicht die ihn bildenden Folienteile in den Bereich thermoelastischer Verformbarkeit überzuführen sowie deren inhärentes Schrumpfvermögen auszulösen. Zu diesem Zweck wird der Clip vorteilhaft durch in ihm aufgebaute elektrische Wirbelströme hinreichend hoch und ausreichend lang erhitzt. Hierzu setzt man den auf der Hüllenzusammenfassung angeordneten Clip hinreichend lang dem elektrischen Feld eines Induktors aus; dies kann beispielsweise dadurch erfolgen, daß man die endseitig zusammengefaßte und verclippte Schlauchhülle durch den Hohlraum einer mit hochfrequentem Wechselstrom beaufschlagten Spule mit stetiger Geschwindigkeit hindurchführt.

Bei der bevorzugten Herstellungsweise wird der Clip auf eine Temperatur von ungefähr 150°C erhitzt, die Erhitzungsdauer liegt dabei im Bereich von Sekunden.

Nach einer 2. Herstellungsvariante werden die zur Bildung der Clips verwendeten Drähte in einer geeigneten Vorrichtung auf hinreichend hohe Temperatur erhitzt. Die zusammenge-

- 8 -

faßten Enden der Hüllenabschnitte werden dann mit den erhitzten Metalldrähten verclippt und zusammengepreßt. Die zur Clipherstellung vorgesehenen Metalldrahtstücke müssen bei dieser Verfahrensvariante auf eine Ausgangstemperatur erhitzt werden, die hinreicht, daß nach Ausbildung des Clips um die Zusammenfassung dieser infolge seines Wärmeinhalts befähigt ist, den unter Preßdruck stehenden Hüllenzusammenfassungsbereich in den Zustand thermoelastischer Formbarkeit überzuführen und Wärmeschrumpfung zu bewirken.

Die Erhitzung der zur Herstellung der Clips vorgesehenen Metalldrahtstücke kann bei dieser Verfahrensvariante ebenfalls durch Induktion, aber auch durch Kontaktwärme, Heißgasbeaufschlagung oder Strahlungserwärmung erfolgen.

Bei der 2. erfindungsgemäßen Verfahrensvariante wird der Clipdraht vor der Ausbildung des Clips auf eine Temperatur von ca. 150°C erhitzt.

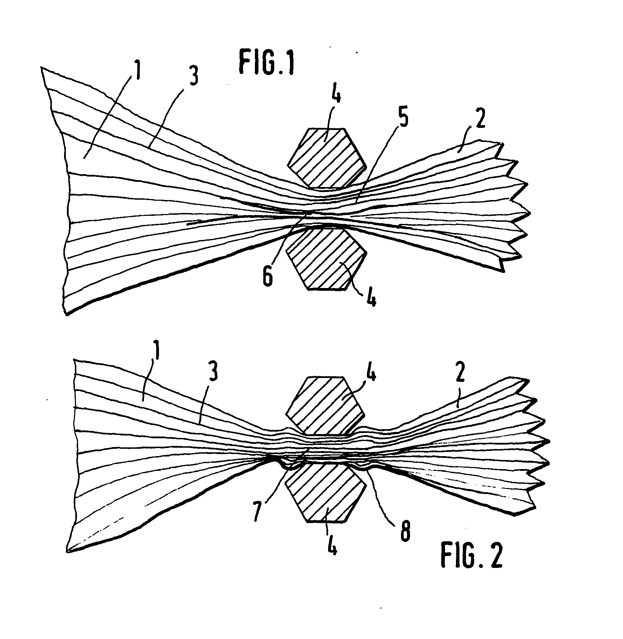

Die gegenständliche Erfindung soll durch die Fig. 1 und 2 erläutert werden.

In Fig. 1 der Zeichnung ist im Querschnitt und schematischer Darstellung eine verclippte Zusammenfassung gezeigt, die derjenigen Verfahrensphase entspricht, bei der die Zusammenfassung mit Hilfe des Clips zusammengepreßt gehalten wird und noch keine Wärmebeaufschlagung des unter der Preßkraft des Clips stehenden Zusammenfassungsbereichs erfolgt ist.

HOECHST AKTIENGESELLSCHAFT
KALLE Niederlassung der Hoechst AG

- 9 -

In der Fig. 2 wird im Querschnitt und schematischer Darstellung der endseitig zusammengefaßte und verclippte Abschnitt gemäß Fig. 1 gezeigt, jedoch mit der Abwandlung, daß die Zusammenfassung nach erfolgter Wärmebeaufschlagung des unter der Preßdruckeinwirkung des Clips stehenden Zusammenfassungsbereichs gezeigt wird.

In Fig. 1 bedeutet 1 den Verpackungshüllenabschnitt, 2 ist das durch Fältelung zusammengefaßte Ende, 3 sind Kanten der die Zusammenfassung bildenden Falten, 4 ist der Clip, 5 zeigt den unter der Preßkrafteinwirkung des Clips 4 stehenden Bereich der Zusammenfassung 2, es ist 6 ein kanülenartiger Durchlaß, der zu seiner Kenntlichmachung nicht maßgerecht dargestellt ist.

In der Fig. 2 haben die Ziffern 1, 2, 3 und 4 dieselbe Bedeutung wie in Fig. 1, 7 bedeutet einen thermisch-mechanisch verdichteten, unter der Preßdruckeinwirkung des Clips 4 stehenden Verschluß der Zusammenfassung, der auch Zusammenfassungsverschluß genannt wird. 8 zeigt die beiden durch Strahlungswärme angeschrumpften verdickten Randbereiche der Zusammenfassung, die sich an den Clip 4 unmittelbar anschließen und die beide ein erfindungswesentlicher Teil des Verschlusses sind. Die Anordnung des Clips 4 ist aus Gründen der Übersichtlichkeit nicht wendelförmig dargestellt.

-----

HOECHST AKTIENGESELLSCHAFT
KALLE Niederlassung der Hoechst AG

Hoe 79/K 018          - 10 -          WLJ-Dr.Gt.-gk
                                      27. Mai 1980

Patentansprüche

1. Schlauchförmiger, flexibler Verpackungshüllenabschnitt aus thermoplastischer Kunststoffolie mit einer den
Schlauchhüllenabschnitt endseitig verschließenden Hüllenzusammenfassung, die von einem Klemmelement aus Metall umgeben und zusammengepreßt gehalten wird, dadurch gekennzeichnet, daß die unter Preßkrafteinwirkung des Klemmelements stehenden Bereiche der Zusammenfassung des Verpackungshüllenabschnitts, der aus unter Einwirkung von
Wärme schrumpfender Kunststoffolie besteht, thermisch-
mechanisch verdichtet sind und einen insbesondere gegenüber flüssigen Stoffen und Gasen im wesentlichen undurchlässigen Verschluß bilden.

2. Verpackungshüllenabschnitt nach Anspruch 1, dadurch
gekennzeichnet, daß der unter Preßkrafteinwirkung des
Klemmelements stehende Bereich der Zusammenfassung in durch
Wärmeeinwirkung geschrumpftem Zustand vorliegt.

3. Verpackungshüllenabschnitt nach Anspruch 1 oder 2, dadurch gekennzeichnet, daß die den Verpackungshüllenabschnitt
bildende Folie aus Polyäthylenterephthalat besteht, die bei
der Einwirkung hinreichender Wärme ca. 20% schrumpft.

4. Verpackungshüllenabschnitt nach einem der Ansprüche 1
bis 3, dadurch gekennzeichnet, daß das Klemmelement ein Clip,
insbesondere aus Aluminiumdraht, ist.

5. Verfahren zur Herstellung eines schlauchförmigen Verpackungshüllenabschnitts mit zusammengefaßtem und verclipptem Ende nach einem der Ansprüche 1 bis 4, bei dem man das Endteil eines Verpackungshüllenabschnitts flachlegt, zusammenfaßt und die Zusammenfassung mit einem Klemmelement zusammenpreßt, dadurch gekennzeichnet, daß man die Zusammenfassung um ihren gesamten Umfang und die Länge der Zusammenfassung partiell mit einem Klemmelement zusammenpreßt und den unter der Preßkrafteinwirkung des Klemmelements stehenden Bereich der Zusammenfassung mit Wärme einer Temperatur beaufschlagt, die hinreicht, die diesen Bereich bildende unter Einwirkung von Wärme schrumpfende Folie in den thermoelastischen formbaren Zustand überzuführen und Schrumpfung der Folie zu bewirken.

6. Verfahren nach Anspruch 5, dadurch gekennzeichnet, daß man zunächst aus einem Stück Metalldraht einen den gesamten Umfang der Zusammenfassung umgebenden und die Zusammenfassung zusammenpressenden Clip bildet und den Clip auf eine Temperatur erhitzt, die bewirkt, daß der unter der Preßkraft des Clips stehende Bereich der Zusammenfassung auf eine Temperatur erwärmt wird, bei der die diesen Bereich bildende Folie in den thermoelastischen formbaren Zustand überführt und die Schrumpfung der Folie bewirkt wird, und man den Clip sowie den wärmebeaufschlagten Bereich der Zusammenfassung dann abkühlt.

7. Verfahren nach Anspruch 6, dadurch gekennzeichnet, daß der Clip durch elektrische Induktionswirkung erhitzt wird.

HOECHST AKTIENGESELLSCHAFT
KALLE Niederlassung der Hoechst AG

- 12 -

8. Verfahren nach Anspruch 5, dadurch gekennzeichnet, daß man das Klemmelement in Form eines Metalldrahts erhitzt und danach aus dem erhitzten Metalldraht einen die Hüllenzusammenfassung zusammenpressenden Clip bildet.

9. Verwendung des endseitig zusammengefaßten und verclippten Verpackungshüllenabschnitts nach einem der Ansprüche 1 bis 8 zur Herstellung von Würsten.

------

0021188

FIG.1

FIG.2

HOE 79/K 018 - HOECHST AKTIENGESELLSCHAFT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 310 927 (NATURIN-WERK BECKER) <br><br> * Seite 5, Zeilen 4-10, 18-27; Seite 6, Zeilen 3-13; Patentansprüche 11,12,16 * | 1,2,4, 5,9 |
| | DE - C - 687 830 (NATURIN-WERK BECKER) <br><br> * Seite 2, Zeilen 13-28; Patentansprüche 1,3,4 * | 1,9 |
| | US - A - 2 816 837 (HOLSMAN) <br><br> * Spalte 3, Zeilen 33-62; Spalte 4, Zeilen 34-45; Spalte 6, Zeilen 57-71 * | 1,2 |
| | LU - A - 53 438 (DISTLER) <br><br> * Seite 3, Zeilen 15-23; Patentansprüche 4,5,9,10,11 * | 1,4 |
| | FR - A - 1 575 328 (I.C.I. LTD.) <br><br> * Seite 6, Zeilen 6-7; Patentansprüche 4,5 * | 3 |
| | GB - A - 1 180 067 (UNION CARBIDE) <br><br> * Seite 13, Zeile 19 - Seite 14, Zeile 13 * | 4,8 |

**KLASSIFIKATION DER ANMELDUNG (Int.Cl. ³)**

A 22 C 11/12

**RECHERCHIERTE SACHGEBIETE (Int. Cl. ³)**

A 22 C
B 65 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-09-1980 | DE LAMEILLEURE |

EPA form 1503.1  06.78